# EUROPÄISCHE PATENTSCHRIFT

(11) **EP 0 610 851 B1**
(45) Veröffentlichungstag und Bekanntmachung des Hinweises auf die Patenterteilung: **07.05.1997**
(21) Anmeldenummer: 94101804.6
(22) Anmeldetag: 07.02.1994
(51) Int. Cl.: C08F 232/08

(54) **Verfahren zur Herstellung von Cycloolefincopolymeren**
Process for preparing cyclo-olefin copolymers
Procédé de préparation de copolymères de cyclo-oléfines

(30) Priorität: 12.02.1993 DE 4304307
(43) Veröffentlichungstag der Anmeldung: 17.08.1994
(73) Patentinhaber: HOECHST AKTIENGESELLSCHAFT, 65929 Frankfurt am Main (DE)
(72) Erfinder: Aulbach, Michael, Dr., D-65719 Hofheim/Taunus (DE); Brekner, Michael-Joachim, Dr., D-60529 Frankfurt (DE); Küber, Frank, Dr., D-61440 Oberursel (DE); Osan, Frank, Dr., D-65779 Kelkheim (DE); Weller, Thomas, Dr., D-55130 Mainz (DE); Rohrmann, Jürgen, Dr., D-65779 Kelkheim/Taunus (DE)

(56) Entgegenhaltungen:
- EP-A- 0 407 870
- EP-A- 0 485 893
- EP-A- 0 503 422

## Beschreibung

Die Erfindung betrifft ein Verfahren zur Herstellung von transparenten Cycloolefincopolymeren mit hohen Reißfestigkeiten.

Aus der Literatur ist bekannt, daß mit Metallocen-Aluminoxan-Katalysatorsystemen Cycloolefinhomo- und -copolymere hergestellt werden können. Die Polymerisation der Cycloolefine verläuft dabei unter Erhalt der Cyclen und kann in Lösungsmitteln oder in Masse durchgeführt werden. Als Lösungsmittel werden z.B. Kohlenwasserstoffe eingesetzt.

Cycloolefincopolymere können mit einem hohen Gehalt an Cycloolefin hergestellt werden, und besitzen dann eine hohe Glastemperatur. Damit verbunden ist eine hohe thermische Formbeständigkeit, weswegen diese Polymere sich zur Verwendung als thermoplastische Formmassen eignen.

Bei Cycloolefincopolymeren, die mittels Metallocentechnologie hergestellt werden, kann man zwei Eigenschaftsreihen unterscheiden. Cycloolefincopolymere, die mit spiegelsymmetrischen Metallocenen hergestellt werden, weisen relativ niedrige Reißspannungen auf. Cycloolefincopolymere, die durch Einsatz von C₂-symmetrischen Metallocenen hergestellt werden, zeichen sich im Vergleich dazu durch hohe Reißspannungen (siehe Tabelle 2). Allerdings wird bei C₂-symmetrischen Metallocenen gefunden, daß sie bei der Polymerisation von Cycloolefinen in Gegenwart von Ethylen, auch teilkristalline Ethylenpolymerisate bilden, welche die Transparenz solcher Produkte deutlich beeinträchtigen. Daher ist zu der Herstellung von transparenten Cycloolefinpolymeren mit den hohen Reißspannungen der Cycloolefinpolymere, die unter Verwendung von C₂-symmetrischen Metallocenen hergestellt wurden, eine zusätzliche Aufarbeitung des Rohproduktes, z.B. eine mehrstufige Filtration (wie in der EP 447 072 beschrieben), bei der die gebildeten teilkristallinen Ethylenpolymerisate entfernt werden, unumgänglich.

Aufgabe der Erfindung war es, ein Verfahren zu finden, welches ethylenhaltige Cycloolefincopolymere liefert, die ähnlich hohe Reißfestigkeiten aufweisen wie die unter Verwendung C₂-symmetrischer Metallocene erzeugten Cycloolefincopolymere und dennoch transparent sind.

Es wurde gefunden, daß durch Verwendung spezieller unsymmetrischer Metallocene diese Aufgabe erfüllt werden kann.

Die Polymerisation wird im flüssigen Cycloolefin selbst oder in Cycloolefin-Lösung durchgeführt, wobei zweckmäßigerweise der Druck oberhalb 1 bar liegt.

Die Erfindung betrifft somit ein Verfahren zur Herstellung eines Cycloolefincopolymers durch Polymerisation von 0,1 bis 99.9 Gew.-%, bezogen auf die Gesamtmenge der Monomeren, mindestens eines polycyclischen Olefins der Formeln I, II, III, IV, V oder VI 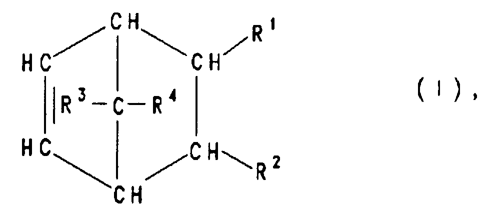 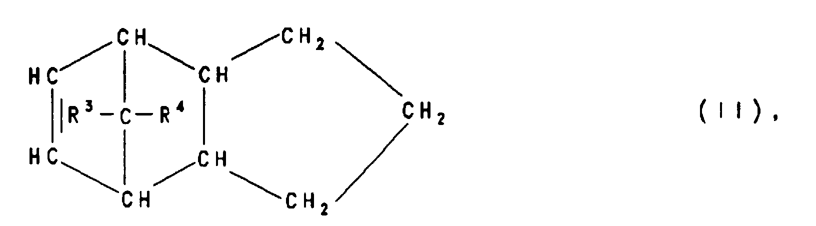 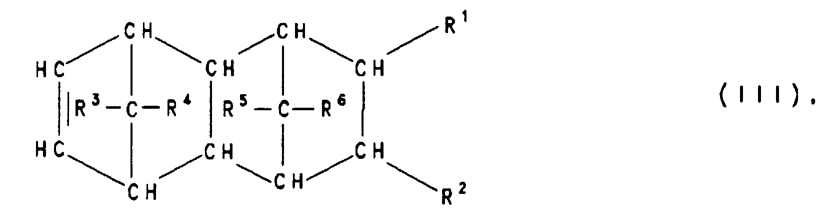 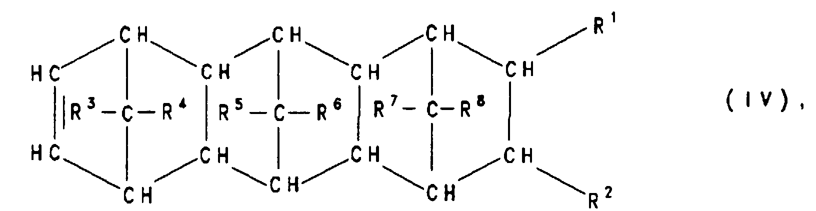 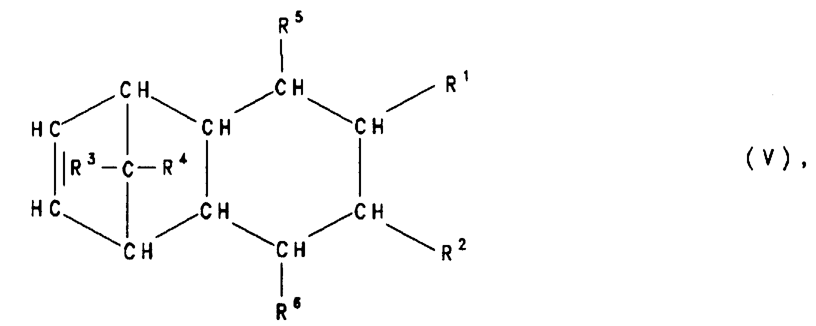 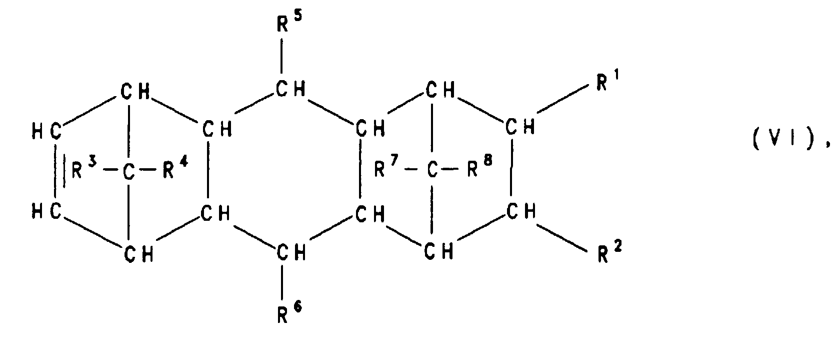 worin R¹, R², R³, R⁴, R⁵, R⁶, R⁷ und R⁸ gleich oder verschieden sind und ein Wasserstoffatom oder einen Kohlenwasserstoffrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel VII 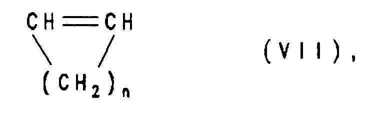 worin n eine Zahl von 2 bis 10 ist, 0,1 bis 99,9 Gew.-%, bezogen auf die Gesamtmenge der Monomeren, Ethylen und 0 bis 99,9 Gew.-%, bezogen auf die Gesamtmenge der Monomeren, mindestens eines acyclischen 1-Olefins der Formel VIII 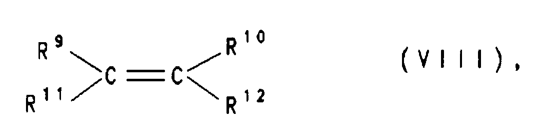 worin R⁹, R¹⁰, R¹¹ und R¹² gleich oder verschieden sind und ein Wasserstoffatom oder einen Kohlenwasserstoffrest bedeuten, bei Temperaturen von -78 bis 150°C und einem Druck von 0,01 bis 64 bar, in Gegenwart eines Katalysators, welcher aus mindestens einem Cokatalysator und mindestens einem Metallocen der Formel XI 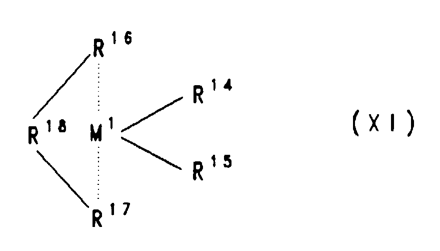 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halgenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe oder eine C₈-C₄₀-Arylalkenylgruppe bedeuten,
- R¹⁸: 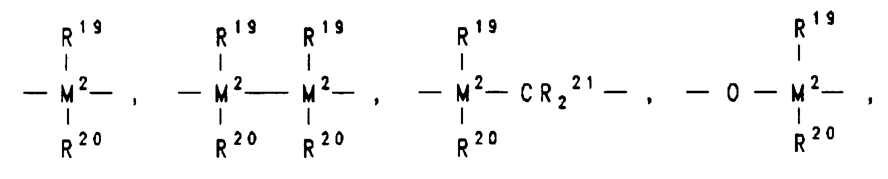 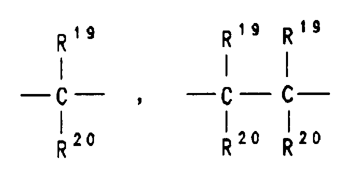 = BR¹⁹ = AlR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰, und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden,
- M²: Silizium, Germanium oder Zinn ist,
dadurch gekennzeichnet, daß R¹⁶ eine Cyclopentadienylgruppe und R¹⁷ eine Indenylgruppe ist.

Im erfindungsgemäßen Verfahren wird mindestens ein polycyclisches Olefin der Formeln I, II, III, IV, V oder VI vorzugsweise ein Cycloolefin der Formeln I oder III, worin R¹, R², R³, R⁴, R⁵, R⁶, R⁷ und R⁸ gleich oder verschieden sind und ein Wasserstoffatom oder einen Kohlenwasserstoffrest, bevorzugt einen C₆-C₁₀-Arylrest oder einen C₁-C₈-Alkylrest bedeuten, wobei gleiche Reste in den verschiedenen Formeln eine unterschiedliche Bedeutung haben können, polymerisiert.
Gegebenenfalls wird auch ein monocyclisches Olefin der Formel VII 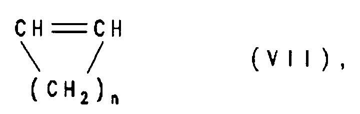 worin n eine Zahl von 2 bis 10 ist, verwendet. Ein anderes Comonomer ist Ethylen. Gegebenenfalls wird auch ein acylisches 1-Olefin der Formel VIII verwendet, 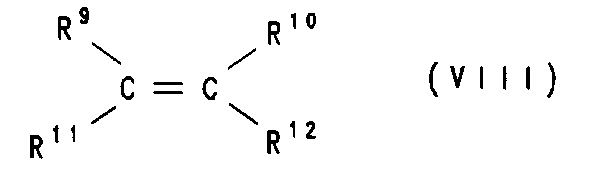 worin R⁹, R¹⁰, R¹¹ und R¹² gleich oder verschieden sind und ein Wasserstoffatom oder einen Kohlenwasserstoffrest, bevorzugt einen C₆-C₁₀-Arylrest und einen C₁-C₈-Alkylrest bedeuten. Bevorzugt ist dabei Propylen.

Insbesondere werden Copolymere von polycyclischen Olefinen, vorzugsweise der Formeln I und III, mit Ethylen hergestellt.

Besonders bevorzugte polycyclische Olefine sind Norbornen und Tetracyclododecen, wobei diese durch (C₁-C₆)-Alkyl substituiert sein können. Sie werden vorzugsweise mit Ethylen copolymerisiert; besondere Bedeutung besitzen Ethylen/Norbornen-Copolymere.

Das polycyclische Olefin der Formel I, II, III, IV, V oder VI wird in einer Menge von 0,1 bis 99,9 Gew.-% und das monocyclische Olefin der Formel VII in einer Menge von 0 bis 99,9 Gew.-% jeweils bezogen auf die Gesamtmenge der Monomeren, eingesetzt.

Die Konzentration des Ethylens und des gegebenenfalls eingesetzten acyclischen Olefins ergibt sich aus deren Löslichkeit in dem Reaktionsmedium bei gegebenem Druck und gegebener Temperatur.

Als polycyclische Olefine, monocyclische Olefine und acyclische Olefine sind auch Gemische zweier oder mehrerer Olefine des jeweiligen Typs zu verstehen. Das heißt, es können neben polycyclischen Homopolymeren und Bicopolymeren auch Ter- und Multicopolymere nach dem erfindungsgemäßen Verfahren hergestellt werden. Auch Copolymere der Cycloolefine der Formel VII mit Ethylen und gegebenenfalls den acyclischen Olefinen der Formel VIII lassen sich vorteilhaft nach dem beschriebenen Verfahren erhalten.

Von den Cycloolefinen der Formel VII ist Cyclopenten, das substituiert sein kann, bevorzugt.

Der für das erfindungsgemäße Verfahren zu verwendende Katalysator besteht aus mindestens einem Cokatalysator und mindestens einem Metallocen (Übergangsmetallkomponente) der Formel XI 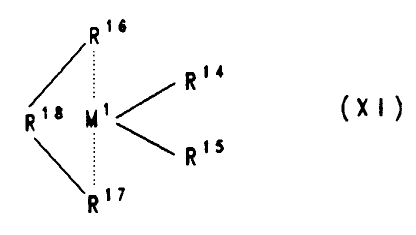 In Formel XI ist M¹ ein Metall aus der Gruppe Titan, Zirkon, Hafnium, Vanadium, Niob und Tantal, vorzugsweise Zirkon und Hafnium. Besonders bevorzugt wird Zirkon verwendet.
- R¹⁴ und R¹⁵: sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.
- R¹⁶: ist ist eine Cyclopentadienylgruppe und R¹⁷ ist eine Indenylgruppe, wobei gegebenenfalls auch einer oder beide Reste R¹⁶ und R¹⁷ einen oder mehrere Reste R²² trägt, die gleich oder verschieden sind und R²² eine C₁-C₁₀-, vorzugsweise C₁-C₄-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe ist, oder mindestens zwei benachbarte Reste R²² der Indenylgruppe R¹⁷ zusammen ein Ringsystem bilden.
Im Falle einer substituierten Indenylgruppe R¹⁷, sind die 2-, 4-, 5-, 6- und 7-Position bevorzugt substituiert. Bilden die Reste R²² der Indenylgruppe R¹⁷ zusammen ein Ringsystem, kann dieses ein- oder mehrkernig sein und auch Substituenten tragen.
- R¹⁸: ist eine ein- oder mehrgliedrige Brücke, welche die Reste R¹⁶ und R¹⁷ verknüpft und bedeutet vorzugsweise 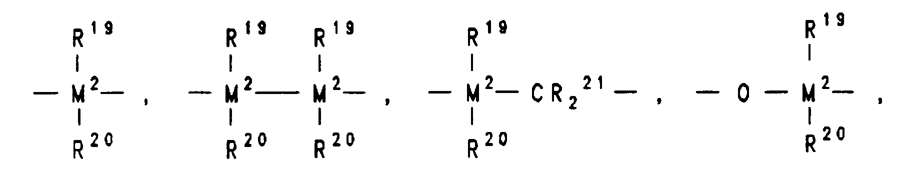 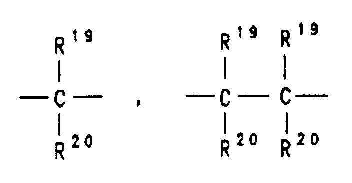 = BR¹⁹ = AlR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰, und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring.

Bevorzugt ist R¹⁸ ein Rest 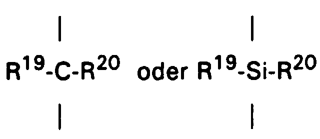 und besonders bevorzugt 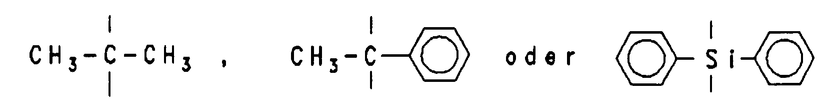 bzw. 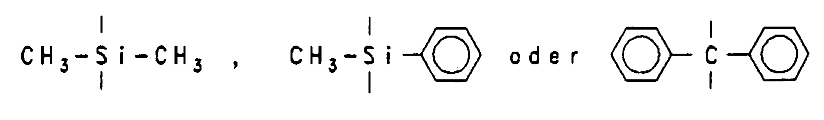
- M²: ist Silizium, Germanium oder Zinn, bevorzugt Silizium oder Germanium, besonders bevorzugt Silizium.

Bevorzugt eingesetzte Metallocene sind:
Isopropylen-(1-indenyl)-cyclopentadienyl-zirkondichlorid,
Isopropylen-(1-indenyl)-2-methylcyclopentadienyl-zirkondichlorid,
Ethylen-(1-indenyl)-cyclopentadienyl-zirkondichlorid,
Methylphenylmethylen-(1-indenyl)-cyclopentadienyl-zirkondichlorid,
Diphenylmethylen-(1-indenyl)-cyclopentadienyl-zirkondichlorid,
Diphenylmethylen-(1-(5-isopropyl)indenyl)-cyclopentadienyl-zirkondichlorid,
Dimethylsilyl-(1-indenyl)-cyclopentadienyl-zirkondichlorid,
Methylphenylsilyl-(1-indenyl)-cyclopentadienyl-zirkondichlorid,
Diphenylsilyl-(1-indenyl)-cyclopentadienyl-zirkondichlorid,
Isopropylen-(1-indenyl)-cyclopentadienyl-titandichlorid,
Isopropylen-(1-indenyl)-2-methylcyclopentadienyl-titandichlorid,
Methylphenylmethylen-(1-indenyl)-cyclopentadienyl-titandichlorid,
Diphenylmethylen-(1-indenyl)-cyclopentadienyl-titandichlorid,
Dimethylsilyl-(1-indenyl)-cyclopentadienyl-titandichlorid,
Methylphenylsilyl-(1-indenyl)-cyclopentadienyl-titandichlorid,
Diphenylsilyl-(1-indenyl)-cyclopentadienyl-titandichlorid, Dimethylsilyl(4,5-benzo-1-indenyl)cyclopentadienylzirkondichlorid, Diphenylmethylen(4,5-benzo-1-indenyl)cyclopentadienylzirkondichlorid, Dimethylsilyl(4,5-benzo-1-indenyl)(methyl-1-cyclopentadienyl)zirkondichlorid, Isopropylen(4,5-benzo-1-indenyl)cyclopentadienylzirkondichlorid, Isopropylen(2-methyl-4,5-benzo-1-indenyl)cyclopentadienylzirkondichlorid oder Gemische aus mindestens zwei dieser Metallocene.

Besonders bevorzugt ist:
Isopropylen-(1-indenyl)-cyclopentadienyl-zirkondichlorid.

Der Cokatalysator ist bevorzugt ein Aluminoxan, insbesondere der Formel IX 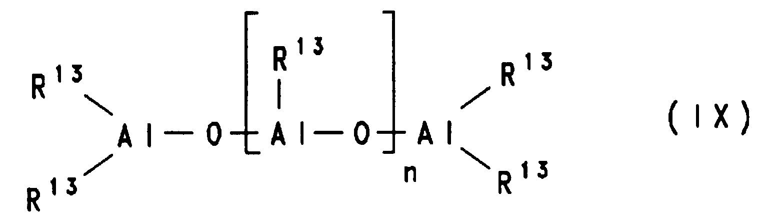 für den linearen Typ und/oder der Formel X 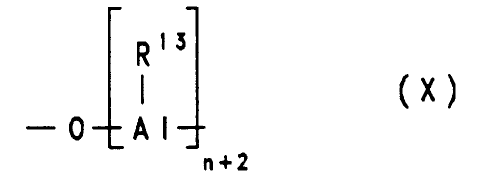 für den cyclischen Typ, wobei in den Formeln IX und X R¹³ gleich oder verschieden sind und eine C₁-C₆-Alkylgruppe, Phenyl oder Benzyl bedeutet und n eine ganze Zahl von 2 bis 50 ist. Die C₁-C₆-Alkylgruppe ist bevorzugt Methyl, Ethyl oder Isobutyl, Butyl oder Neopentyl, besonders bevorzugt Methyl. n ist eine ganze Zahl von 0 bis 50, bevorzugt 5 bis 40.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R¹³ werden entsprechend der gewünschten Zusammensetzung zwei verschiedene Aluminiumtrialkyle (AlR₃ + AlR'₃) mit Wasser umgesetzt (S. Pasynkiewicz, Polyhedron 9 (1990) 429, EP-A 302 424).

Die genaue räumliche Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist auch möglich, das Aluminoxan auf einen Träger aufzubringen und es dann als Suspension in geträgerter Form einzusetzen. Es sind mehrere Trägerungsverfahren bekannt (EP 92107331.8), z.B. kann Kieselgel als Träger fungieren.

Es ist möglich, das Metallocen vor dem Einsatz in der Polymerisationsreaktion mit einem Cokatalysator, insbesondere einem Aluminoxan vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis
60 Stunden, vorzugsweise 5 bis 60 Minuten. Man arbeitet bei einer Temperatur von -78°C bis 100°C, vorzugsweise 0 bis 70°C.

Sie können auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (EP-A 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocene werden bevorzugt in Form ihrer Racemate eingesetzt. Die Metallocenverbindung wird in einer Konzentration, bezogen auf das Übergangsmetall, von 10⁻³ bis 10⁻⁸, vorzugsweise 10⁻⁴ bis 10⁻⁷ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 : 10⁻² mol pro dm³ Reaktorvolumen verwendet, bezogen auf den Gehalt an Aluminium. Prinzipiell sind aber auch höhere Konzentrationen möglich.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 80 Mol-% der cyclischen Komponenten und besonders bevorzugt werden Einbauraten zwischen 40 und 60 Mol-% der cyclischen Komponenten.

Die Polymerisation kann auch mehrstufig erfolgen, wobei auch Blockcopolymere entstehen können (P 42 05 416.8).

Die mittlere Molmasse des gebildeten Polymeren läßt sich weiter durch Wasserstoff-Dosierung, Variation der Katalysatorkonzentration oder Variation der Temperatur in bekannter Weise steuern.

Die Polydispersität M_{w}/Mₙ der Copolymeren ist mit Werten von 1,9 - 3,5 recht eng. Dadurch resultiert ein Eigenschaftsbild, das diese für das Spritzgießen besonders geeignet macht.

Mit dem beschriebenen Verfahren lassen sich amorphe Cycloolefincopolymere herstellen, die keine teilkristallinen Ethylenpolymerisate enthalten. Die Copolymeren sind transparent, hart und thermoplastisch verarbeitbar. Die Reißspannungen (gemäß DIN 53457) liegen im Bereich von 50 bis 100 MPa, bevorzugt zwischen 55 und 70 MPa. Sowohl beim Extrudieren als auch beim Spritzgießen wurden bei Temperaturen von 300⁰C keine Zersetzungsreaktionen oder ein Viskositätsabbau gefunden.

Die erfindungsgemäß hergestellten Materialien eignen sich besonders zur Herstellung von Extrusionsteilen wie Folien, Schläuchen, Rohren, Stangen und Fasern als auch zur Herstellung von Spritzgußartikeln beliebiger Form und Größe. Eine wichtige Eigenschaft der erfindungsgemäßen Materialien ist ihre Transparenz. Dadurch kommt besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

In schlagzähmodifizierter Form sind die erfindungsgemäßen Materialien als Strukturwerkstoff in verschiedenen technischen Bereichen einsetzbar (P 42 13 219.3).

Die erfindungsgemäßen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid

Die in den folgenden Beispielen angegebenen Glastemperaturen Tg wurden mittels DSC (Differential Scanning Calorimetry) bei einer Aufheizrate von 20°C/min bestimmt. Die angegebenen Viskositätszahlen wurden gemäß DIN 53 728 ermittelt.

### Beispiel 1:

Ein 1 ,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 6.0 bar (Überdruck) eingestellt, 5 cm³ toluolische Methylaluminoxanlösung (10,1 Gew.-% Methylaluminoxan der Molmasse 1300 g/Mol nach kryoskopischer Bestimmung) in den Reaktor gegeben und 15 min bei 70° C gerührt. Eine Lösung von 1,5 mg Isopropylen(1-indenyl)-cyclopentadienylzirkondichlorid in 5 cm³ toluolischer Methylaluminoxanlösung wurde nach 15 minütiger Voraktivierung zugegeben. (Zur Molekulargewichtsregelung kann Wasserstoff vor der Katalysatorzugabe zugegeben werden).

Unter Rühren (750 UPM) wurde eine Stunde bei 70°C polymerisiert, wobei der Ethylendruck durch Nachdosieren bei 6,0 bar gehalten wurde.

Die Reaktionslösung wurde in ein Gefäß abgelassen und schnell in 5 dm³ Aceton eingetragen, 10 min gerührt und anschließend das ausgefallene Produkt filtriert. Der Filterkuchen wurde mehrfach mit 10proz. Salzsäure und Aceton im Wechsel gewaschen. Abschließend wurde neutral gewaschen und mit Aceton gerührt. Das so gewaschene Polymer wird abfiltriert und bei 80°C und einem Druck von 0,2 bar 15 Stunden getrocknet.
Es wurden 41 g eines farblosen Polymers erhalten. An dem Polymer wurde eine Viskositätszahl von 67 cm³/g und eine Glastemperatur von 197°C. Durch thermische Analyse (DSC) zwischen 20⁰C und 220°C konnte kein Schmelzpeak nachgewiesen werden.

### Beispiel 2 (Vergleichsbeispiel zu Beispiel 1):

Ein 1,5-dm³-Reaktor wurde mit Ethylen gefüllt und mit 575 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 6.0 bar (Überdruck) eingestellt, 5 cm³ toluolische Methylaluminoxanlösung (10,1 Gew.-% Methylaluminoxan der Molmasse 1300 g/Mol nach kryoskopischer Bestimmung) in den Reaktor gegeben und 15 min bei 70°C gerührt. Eine Lösung von 10,0 mg rac Dimethylsilyl-bis-(1-indenyl)zirkondichlorid in 5 cm³ toluolischer Methylaluminoxanlösung wurde nach 15 minütiger Voraktivierung zugegeben. (Zur Molekulargewichtsregelung kann Wasserstoff vor der Katalysatorzugabe zugegeben werden).

Unter Rühren (750 UPM) wurde eine Stunde bei 70°C polymerisiert, wobei der Ethylendruck durch Nachdosieren bei 6,0 bar gehalten wurde.

Die Reaktionslösung wurde in ein Gefäß abgelassen und schnell in 5 dm³ Aceton eingetragen, 10 min gerührt und anschließend das ausgefallene Prdukt filtriert. Der Filterkuchen wurde mehrfach mit 10 prozentiger Salzsäure und Aceton im Wechsel gewaschen. Abschließend wurde neutral gewaschen und mit Aceton gerührt. Das so gewaschene Polymer wird abfiltriert und bei 80°C und einem Druck von 0,2 bar 15 Stunden getrocknet.
Es wurden 23 g eines milchig trüben Polymers erhalten. An dem Polymer wurde eine Viskositätszahl von 123 cm³/g und eine Glastemperatur von 175°C gemessen. Die thermische Analyse (DSC) ergab bei 127°C einen Schmelzpeak, der einer Schmelzwärme von 0,540 J/g entspricht und auf teilkristalline Ethylenpolymerisate zurückzuführen ist.

### Beispiel 3:

Ein trockener 75-dm³-Polymerisationsreaktor mit Rührer wurde mit Stickstoff und dann mit Ethylen gespült und mit 27,2 kg Norbornen-Schmelze bei 80°C gefüllt. Unter Rühren wurde dann der Reaktor bei einer Temperatur von 80°C gehalten und 20 bar Ethylen (Überdruck) aufgedrückt.

Danach wurden 500 cm³ toluolische Methylaluminoxanlösung (10,1 Gew.-% Methylaluminoxan mit Molmasse 1300 g/mol nach kryoskopischer Bestimmung) in den Reaktor dosiert und die Mischung 15 min bei 80°C gerührt, wobei durch Nachdosieren der Ethylendruck bei 20 bar gehalten wurde. Parallel dazu wurden 32 mg Isopropylen(1-indenyl)cylcopentadienylzirkondichlorid in 500 cm³ toluolischer Methylaluminoxanlösung gelöst und durch 15 minütiges Stehenlassen voraktiviert. Dann wurde die Lösung des Komplexes in den Reaktor dosiert. Unter Rühren (750 UPM) wurde dann 1,1 Stunde bei 80°C polymerisiert, wobei der Ethylendruck durch Nachdosieren bei 20 bar gehalten wurde.
Danach wurde der Reaktorinhalt schnell in ein Rührgefäß abgelassen, in dem 200 cm³ Isopropanol (als Stopper) vorgelegt waren. Die Mischung wurde in 500 dm³ Aceton ausgefällt, 10 min gerührt und anschließend filtriert.

Das abgetrennte Polymer wurde dann mit einer Mischung aus zwei Teilen 3-normaler Salzsäure und einem Teil Ethanol versetzt und 2 Stunden gerührt. Nach erneuter Filtration wurde das Polymer mit Wasser neutral gewaschen und bei 80°C und einem Druck von 0,2 bar 15 Stunden getrocknet.

Es wurden 7,4 kg eines farblosen Polymers erhalten. Es wurde eine Viskositätszahl von 66 cm³/g und eine Glastemperatur (Tg) von 155°C gemessen. Durch thermische Analylse (DSC) zwischen 20°C und 250°C konnte kein Schmelzpeak nachgewiesen werden.

### Beispiel 4:

Ein 1,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (1 bar) wurde die Lösung mit Ethylen gesättigt. Es wurde ein Druck von 1.0 bar (Überdruck) eingestellt, 5 cm³ toluolische Methylaluminoxanlösung (10,1 Gew.-% Methylaluminoxan der Molmasse 1300 g/Mol nach kryoskopischer Bestimmung) in den Reaktor gegeben und 15 min bei 70°C gerührt. Eine Lösung von 1,0 mg Isopropylen(1-indenyl)cyclopentadienylzirkondichlorid in 5 cm³ toluolischer Methylaluminoxanlösung wurde nach 15 minütiger Voraktivierung zugegeben. (Zur Molekulargewichtsregelung kann Wasserstoff vor der Katalysatorzugabe zugegeben werden).

Unter Rühren (750 UPM) wurde eine Stunde bei 70°C polymerisiert, wobei der Ethylendruck durch Nachdosieren bei 1,0 bar gehalten wurde.

Die Reaktionslösung wurde in ein Gefäß abgelassen und schnell in 5 dm³ Aceton eingetropft, 10 min gerührt und anschließend das ausgefallene Produkt filtriert. Der Filterkuchen wurde mehrfach mit 10proz. Salzsäure und Aceton im Wechsel gewaschen. Abschließend wurde neutral gewaschen und mit Aceton gerührt. Das so gewaschene Polymer wird abfiltriert und bei 80°C und einem Druck von 0,2 bar 15 Stunden getrocknet.
Es wurden 12 g eines farblosen Polymers erhalten. An dem Polymer wurde eine Viskositätszahl von 40 cm³/g und eine Glastemperatur von 239°C gemessen. Durch thermische Analylse (DSC) zwischen 20°C und 250°C konnte kein Schmelzpeak nachgewiesen werden.

### Beispiel 5:

Ein 1,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 6.0 bar (Überdruck) eingestellt, 5 cm³ toluolische Methylaluminoxanlösung (10,1 Gew.-% Methylaluminoxan der Molmasse 1300 g/Mol nach kryoskopischer Bestimmung) in den Reaktor gegeben und 15 min bei 70°C gerührt. Eine Lösung von 5,3 mg Isopropylen(1-indenyl)-3-methylcyclopentadienylzirkondichlorid (Mischung aus rac- und meso-Form 1 : 1) in 5 cm³ toluolischer Methylaluminoxanlösung wurde nach 15 minütiger Voraktivierung zugegeben. (Zur Molekulargewichtsregelung kann Wasserstoff vor der Katalysatorzugabe zugegeben werden).

Unter Rühren (750 UPM) wurde eine Stunde bei 70°C polymerisiert, wobei der Ethylendruck durch Nachdosieren bei 6,0 bar gehalten wurde.

Die Reaktionslösung wurde in ein Gefäß abgelassen und schnell in 5 dm³ Aceton eingetragen, 10 min gerührt und anschließend das ausgefallene Produkt filtriert. Der Filterkuchen wurde mehrfach mit 10proz. Salzsäure und Aceton im Wechsel gewaschen. Abschließend wurde neutral gewaschen und mit Aceton gerührt. Das so gewaschene Polymer wird abfiltriert und bei 80°C und einem Druck von 0,2 bar 15 Stunden getrocknet.
Es wurden 56 g eines farblosen Polymers erhalten. An dem Polymer wurde eine Viskositätszahl von 95 cm³/g und eine Glastemperatur von 168°C gemessen. Durch thermische Analyse (DSC) zwischen 20°C und 250°C konnte kein Schmelzpeak nachgewiesen werden.

### Beispiel 6:

Ein 1,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 6.0 bar (Überdruck) eingestellt, 5 cm³ toluolische Methylaluminoxanlösung (10,1 Gew.-% Methylaluminoxan der Molmasse 1300 g/Mol nach kryoskopischer Bestimmung) in den Reaktor gegeben und 15 min bei 70°C gerührt. Eine Lösung von 1,5 mg Dimethylsilyl(1-indenyl)cyclopentadienylzirkondichlorid in 5 cm³ toluolischer Methylaluminoxanlösung wurde nach 15 minütiger Voraktivierung zugegeben. (Zur Molekulargewichtsregelung kann Wasserstoff vor der Katalysatorzugabe zugegeben werden).

Unter Rühren (750 UPM) wurde eine Stunde bei 70°C polymerisiert, wobei der Ethylendruck durch Nachdosieren bei 6,0 bar gehalten wurde.

Die Reaktionslösung wurde in ein Gefäß abgelassen und schnell in 5 dm³ Aceton eingetropft, 10 min gerührt und anschließend das ausgefallene Produkt filtriert. Der Filterkuchen wurde mehrfach mit 10proz. Salzsäure und Aceton im Wechsel gewaschen. Abschließend wurde neutral gewaschen und mit Aceton gerührt. Das so gewaschene Polymer wird abfiltriert und bei 80°C und einem Druck von 0,2 bar 15 Stunden getrocknet.
Es wurden 16 g eines farblosen Polymers erhalten. An dem Polymer wurde eine Viskositätszahl von 46 cm³/g und eine Glastemperatur von 215°C gemessen. Durch thermische Analyse (DSC) konnte keine Schmelzwärme gemessen werden.

### Beispiel 7 (Vergleichsbeispiel zu Beispiel 1)

Ein 1 ,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 6.0 bar (Überdruck) eingestellt, 5 cm³ toluolische Methylaluminoxanlösung (10,1 Gew.-% Methylaluminoxan der Molmasse 1300 g/Mol nach kryoskopischer Bestimmung) in den Reaktor gegeben und 15 min bei 70°C gerührt. Eine Lösung von 2,7 mg Diphenylmethylen(9-fluorenyl)-cyclopentadienylzirkondichlorid in 5 cm³ toluolischer Methylaluminoxanlösung wurde nach 15 minütiger Voraktivierung zugegeben.

Unter Rühren (750 UPM) wurde eine Stunde bei 70°C polymerisiert, wobei der Ethylendruck durch Nachdosieren bei 6,0 bar gehalten wurde.

Die Reaktionslösung wurde in ein Gefäß abgelassen und schnell in 5 dm³ Aceton eingetropft, 10 min gerührt und anschließend filtriert.

Der erhaltene Feststoff wurde mehrfach mit 10 %iger Salzsäure und Aceton im Wechsel gewaschen. Es wurde neutral gewaschen und nochmals mit Aceton gerührt. Das erneut filtrierte Polymer wurde bei 80°C und einem Druck von 0,2 bar 15 Stunden getrocknet.

Es wurden 59 g eines farblosen Polymers erhalten. Es wurde eine Viskositätszahl von 172 cm³/g und eine Glastemperatur Tg von 160°C gemessen (Tabelle 1).

### Beispiel: 8

In einem 1,5 dm³-Autoklav, der vorher gründlich mit Ethen gespühlt wurde, werden 600 cm³ einer 85-gewichtsprozentigen Lösung von Norbornen in Toluol vorgelegt. Durch mehrfaches Aufdrücken von Ethen (6 bar) wurde die Lösung mit Ethen gesättigt. In den so vorbereiteten Reaktor wurden im Gegenstrom 5 cm³ toluolische Methylaluminoxanlösung (10,1 -gewichtsprozentige Methylaluminoxanlösung der Molmasse 1300 g/mol nach kryoskopischer Bestimmung) dosiert und 30 min bei 70°C gerührt. Eine Lösung von 1,0 mg Isopropylen(4,5-benzo-1-indenyl)-cyclopentadienylzirkondichlorid in 5 cm³ toluolischer Methylaluminoxanlösung wurde nach 15 minütiger Voraktivierung zugegeben. (Im Falle einer Wasserstoffregelung kann an dieser Stelle Wasserstoff aufgepreßt werden).
Unter Rühren (750 UPM) wurde eine Stunde polymerisiert, wobei der Ethendruck durch Nachdosieren bei 6 bar (6 bar Überdruck) gehalten wurde. Nach Ende der Reaktionszeit wurde das Polymerisationsgemisch in ein Gefäß abgelassen und sofort in 5 dm³ Aceton eingetragen, 10 min gerührt und anschließend das ausgefallene Produkt filtriert. Der Filterkuchen wurde je 3 mal abwechselnd mit 10 proz. Salzsäure und Aceton gewaschen. Abschließend wurde mit Wasser neutral gewaschen, der Rückstand in Aceton aufgeschlämmt und erneut filtriert. Das so gereinigte Polymer wurde bei 80 im Vakuum (0,2 bar) 15 Stunden getrocknet.

Nach der Trocknung wurden 12 g farbloses Polymer erhalten, welches eine Glastemperatur von 180 °C und eine Viskositätszahl von 96 cm³/g aufwies.

### Beispiel: 9

Es wurde analog Beispiel 8 verfahren, es werden jedoch 4 mg Dimethylsilyl(4,5-benzo-1-indenyl)cyclopentadienylzirkondichlorid eingesetzt.

Nach der Trocknung wurden 4,8 g farbloses Polymer erhalten, welches eine Glastemperatur von 224 °C und eine Viskositätszahl von 56 cm³/g aufwies.

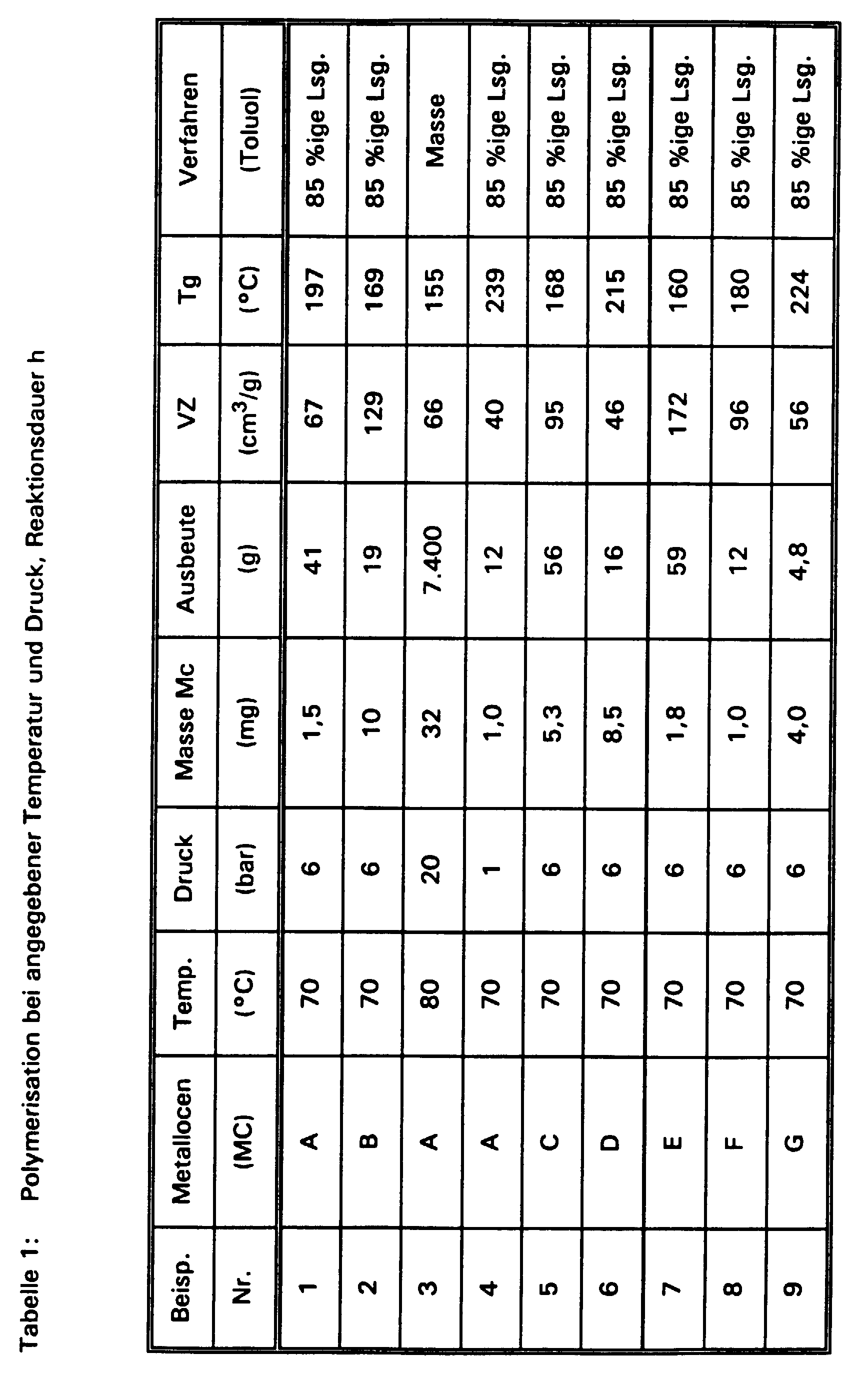

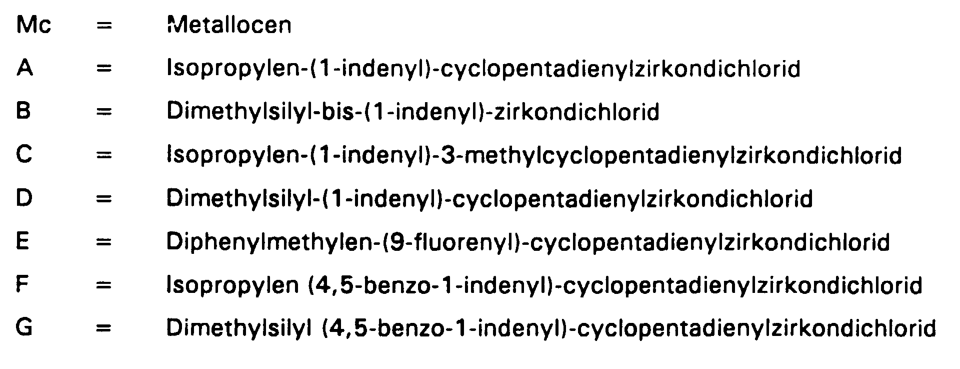

**Tabelle 2:**

| Mechanische Eigenschaften der Cycloolefincopolymere aus den Beispielen 1, 2, 7, 8 und 9; Zugdehnungsversuch (DIN 53457, Instron 4302) | | | | | |
|---|---|---|---|---|---|
| | Polymer aus Beispiel 1 | Polymer aus Beispiel 2 | Polymer aus Beispiel 7 | Polymer aus Beispiel 8 | Polymer aus Beispiel 9 |
| Reißspannung [MPa] | 61.40 | 64.54 | 44.84 | 63.73 | 59,50 |
| Reißdehnung [%] | 3.60 | 3.58 | 3.36 | 3.55 | 3.30 |

## Patentansprüche

1. Verfahren zur Herstellung eines Cycloolefincopolymers durch Polymerisation von 0,1 bis 99.9 Gew.-%, bezogen auf die Gesamtmenge der Monomeren, mindestens eines polycyclischen Olefins der Formeln I, II, III, IV, V oder VI 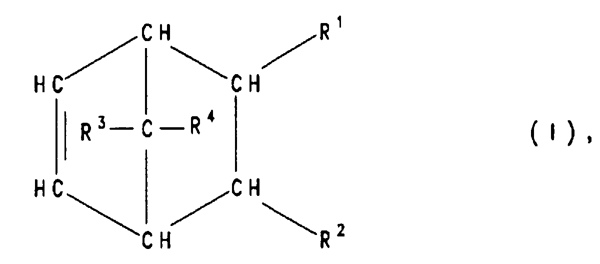 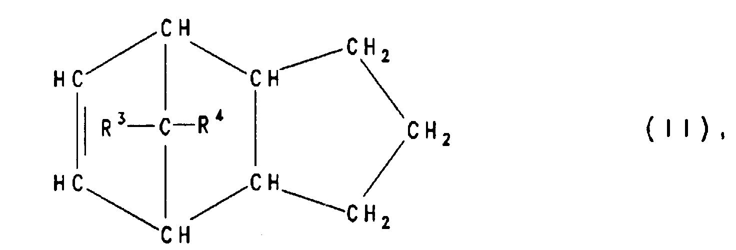 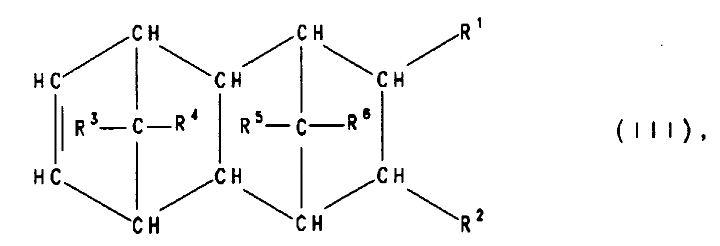 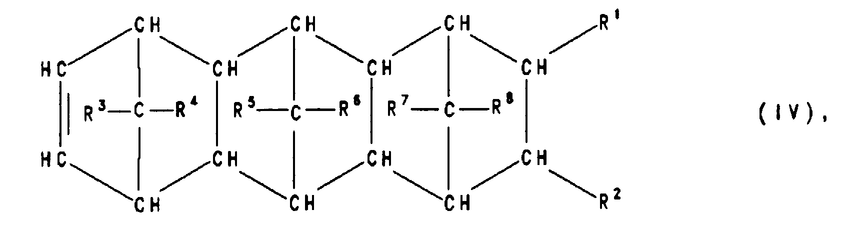 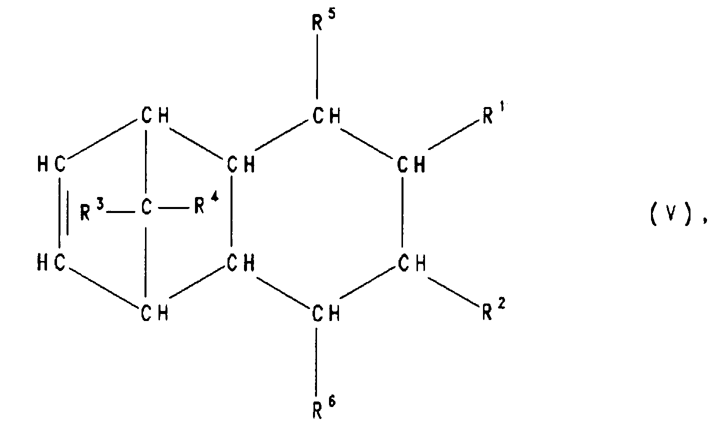 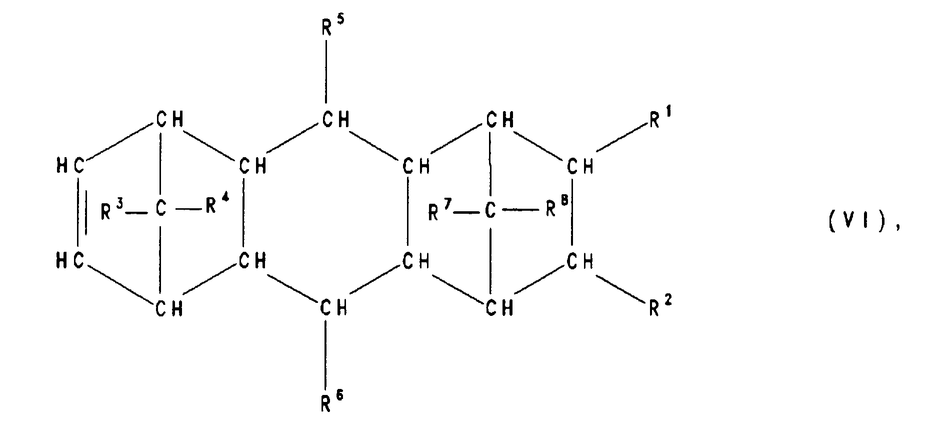 worin R¹, R², R³, R⁴, R⁵, R⁶, R⁷ und R⁸ gleich oder verschieden sind und ein Wasserstoffatom oder einen Kohlenwasserstoffrest bedeuten, wobei gleiche Reste in den verschiedenen Formeln eine unterschiedliche Bedeutung haben können, 0 bis 99,9 Gew.-%, bezogen auf die Gesamtmenge der Monomeren, eines Cycloolefins der Formel VII 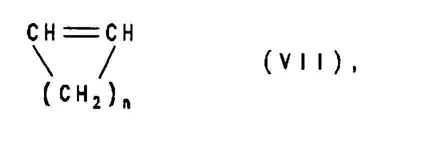 worin n eine Zahl von 2 bis 10 ist, 0,1 bis 99,9 Gew.-%, bezogen auf die Gesamtmenge der Monomeren, Ethylen und 0 bis 99,9 Gew.-%, bezogen auf die Gesamtmenge der Monomeren, mindestens eines acyclischen 1-Olefins der Formel VIII 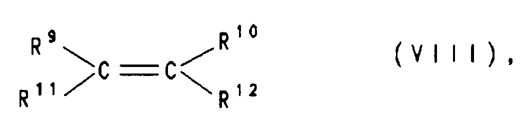 worin R⁹, R¹⁰, R¹¹ und R¹² gleich oder verschieden sind und ein Wasserstoffatom oder einen Kohlenwasserstoffrest bedeuten, bei Temperaturen von 20 bis 150°C und einem Druck von 0,01 bis 64 bar, in Gegenwart eines Katalysators, welcher aus mindestens einem Cokatalysator und mindestens einem Metallocen der Formel XI 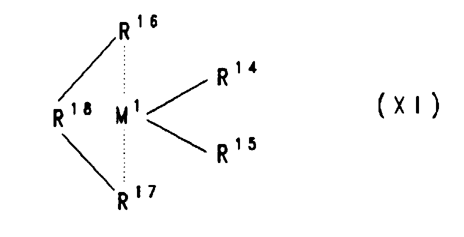 besteht, worin
M¹ Titan, Zirkon, Hafnium, Vanadium, Niob oder Tantal ist,
R¹⁴ und R¹⁵ gleich oder verschieden sind und ein Wasserstoffatom, ein Halgenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe oder eine C₈-C₄₀-Arylalkenylgruppe bedeuten,
R¹⁸ 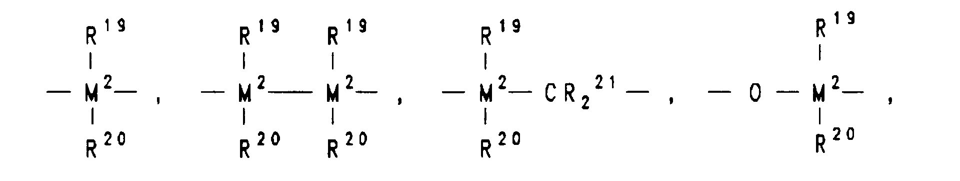 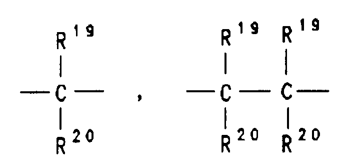 = BR¹⁹ = AlR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰, und R²¹ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine 6₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden,
M² Silizium, Germanium oder Zinn ist,
dadurch gekennzeichnet, daß R¹⁶ eine Cyclopentadienylgruppe und R¹⁷ eine Indenylgruppe ist.

2. Verfahren gemäß Anspruch 1, dadurch gekennzeichnet, daß im flüssigen Cycloolefin selbst oder in Cycloolefin-Lösung polymerisiert wird.

3. Verfahren gemäß Anspruch 1 oder 2, dadurch gekennzeichnet, daß als Metallocen der Formel XI
Isopropylen-(1-indenyl)cyclopentadienyl-zirkondichlorid,
Isopropylen-(1-indenyl)-2-methylcyclopentadieny-zirkondichlorid,
Ethylen-(1-indenyl)-cyclopentadienyl-zirkondichlorid,
Methylphenylmethylen-(1-indenyl)-cyclopentadienyl-zirkondichlorid
Diphenylmethylen-(1-indenyl)-cyclopentadienyl-zirkondichlorid,
Dimethylsilyl-(1-indenyl)-cyclopentadienyl-zirkondichlorid,
Methylphenylsilyl-(1-indenyl)-cyclopentadienyl-zirkondichlorid,
Diphenylsilyl-(1-indenyl)-cyclopentadienyl-zirkondichlorid,
Isopropylen-(1-indenyl)-cyclopentadienyl-titandichlorid,
Isopropylen-(1-indenyl)-2-methylcyclopentadienyl-titandichlorid,
Methylphenylmethylen-(1-indenyl)-cyclopentadienyl-titandichlorid,
Diphenylmethylen-(1-indenyl)-cyclopentadienyl-titandichlorid,
Dimethylsilyl-(1-indenyl)-cyclopentadienyl-titandichlorid,
Methylphenylsilyl-(1-indenyl)-cyclopentadienyl-titandichlorid,
Diphenylsilyl-(1-indenyl)-cyclopentadienyl-titandichlorid,
Dimethylsilyl(4,5-benzo-1-indenyl)cyclopentadienylzirkondichlorid,
Diphenylmethylen(4,5-benzo-1-indenyl)cyclopentadienylzirkondichlorid,
Dimethylsilyl(4,5-benzo-1-indenyl)(methyl-1-cyclopentadienyl)zirkondichlorid,
Isopropylen(4,5-benzo-1-indenyl)cyclopentadienylzirkondichlorid,
Isopropylen(2-methyl-4,5-benzo-1-indenyl)cyclopentadienylzirkondichlorid
oder Gemische aus mindestens zwei dieser Katalysatoren verwendet werden.

4. Verfahren gemäß einem oder mehreren der Ansprüche 1 bis 3, dadurch gekennzeichnet, daß als Cokatalysator ein Aluminoxan eingesetzt wird.

5. Verfahren gemäß einem oder mehreren der Ansprüche 1 bis 4, dadurch gekennzeichnet, daß das polycyclische Olefin Norbornen oder Tetracyclododecen ist.

6. Verfahren gemäß einem der Ansprüche 1 bis 4, dadurch gekennzeichnet, daß ein Copolymer aus Norbornen und Ethylen hergestellt wird.

7. Cycloolefincopolymer, herstellbar nach dem Verfahren gemäß einem oder mehreren der Ansprüche 1 bis 6.

## Claims

1. A process for preparing a cycloolefin copolymer by polymerization of from 0.1 to 99.9% by weight, based on the total amount of monomers, of at least one polycyclic olefin of the formula I, II, III, IV, V or VI 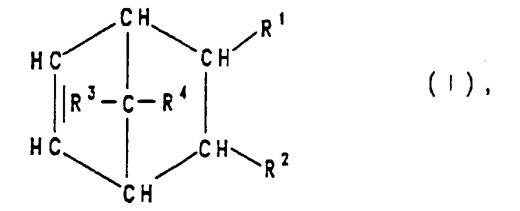 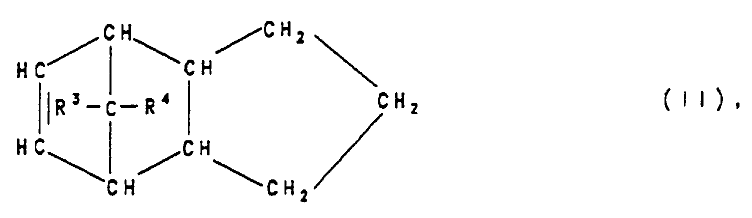 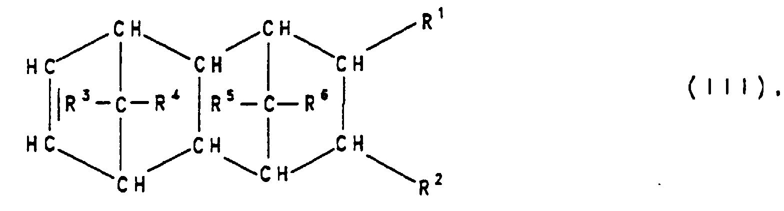 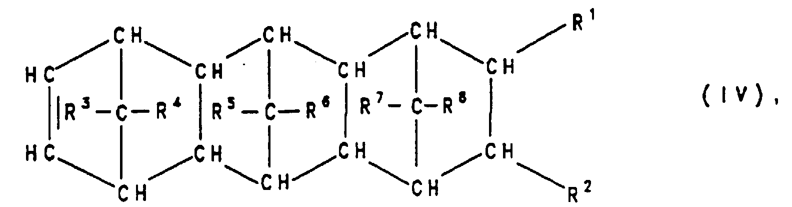 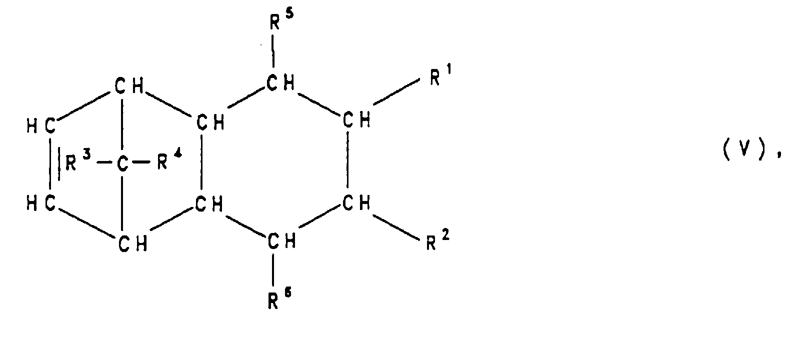 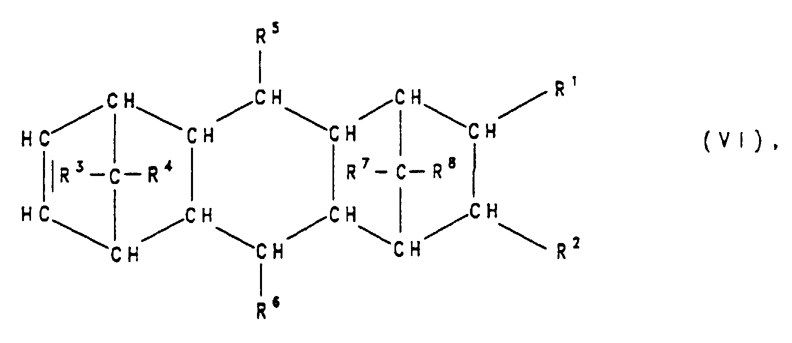 in which R¹, R², R³, R⁴, R⁵, R⁶, R⁷ and R⁸ are identical or different and are a hydrogen atom or a hydrocarbon radical, where identical radicals in the various formulae can have different meanings, from 0 to 99.9% by weight, based on the total amount of monomers, of a cycloolefin of the formula VII 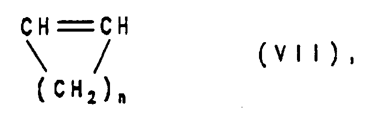 in which n is from 2 to 10, from 0.1 to 99.9% by weight, based on the total amount of monomers, of ethylene and from 0 to 99.9% by weight, based on the total amount of monomers, of at least one acyclic 1-olefin of the formula VIII 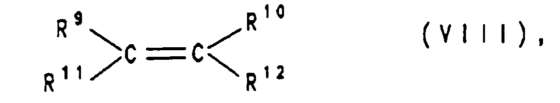 in which R⁹, R¹⁰, R¹¹ and R¹² are identical or different and are a hydrogen atom or a hydrocarbon radical, at temperatures from 20 to 150°C and a pressure from 0.01 to 64 bar, in the presence of a catalyst which comprises at least one cocatalyst and at least one metallocene of the formula XI 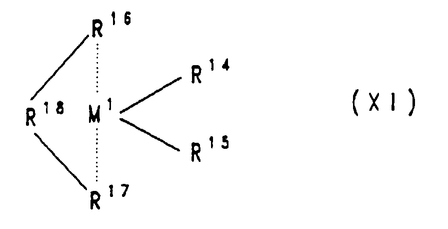 in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group or a C₈-C₄₀-arylalkenyl group,
R¹⁸ is
R¹⁸ 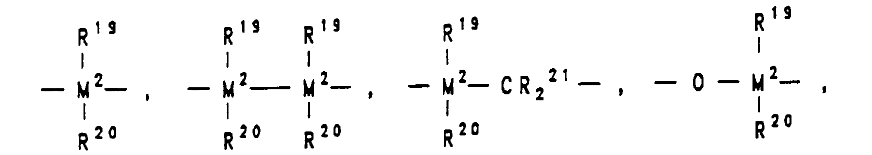 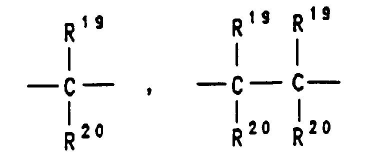 = BR¹⁹, = AlR¹⁹, -Ge-, -Sn-, -O-, -S-, m SO, = SO₂, = NR¹⁹, - CO, = PR¹⁹ or = P(O)R¹⁹, where R¹⁹, R²⁰ and R²¹ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₁₀-arylalkenyl group or a C₇-C₄₀-alkylaryl group or R¹⁹ and R²⁰ or R¹⁹ and R²¹ in each case form a ring with the atoms connecting them,
M² is silicon, germanium or tin,
wherein R¹⁶ is a cyclopentadienyl group and R¹⁷ is an indenyl group.

2. The process as claimed in claim 1, wherein polymerization is carried out in the liquid cycloolefin itself or in cycloolefin solution.

3. The process as claimed in claim 1 or 2, wherein the metallocene of the formula XI which is used is
isopropylene-(1-indenyl)cyclopentadienylzirconium dichloride,
isopropylene-(1-indenyl)-2-methylcyclopentadienylzirconium dichloride,
ethylene-(1-indenyl)cyclopentadienylzirconium dichloride,
methylphenylmethylene-(1-indenyl)cyclopentadienylzirconium dichloride,
diphenylmethylene-(1-indenyl)cyclopentadienylzirconium dichloride,
dimethylsilyl-(1-indenyl)cyclopentadienylzirconium dichloride,
methylphenylsilyl-(1-indenyl)cyclopentadienylzirconium dichloride,
diphenylsilyl-(1-indenyl)cyclopentadienylzirconium dichloride,
isopropylene-(1-indenyl)cyclopentadienyltitanium dichloride
isopropylene-(1-indenyl)-2-methylcyclopentadienyltitanium dichloride,
methylphenylmethylene-(1-indenyl)cyclopentadienyltitanium dichloride,
diphenylmethylene-(1-indenyl)cyclopentadienyltitanium dichloride,
dimethylsilyl-(1-indenyl)cyclopentadienyltitanium dichloride,
methylphenylsilyl-(1-indenyl)cyclopentadienyltitanium dichloride,
diphenylsilyl-(1-indenyl)cyclopentadienyltitanium dichloride,
dimethylsilyl-(4,5-benzo-1-indenyl)cyclopentadienylzirconium dichloride,
diphenylmethylene-(4,5-benzo-1-indenyl)cyclopentadienylzirconium dichloride,
dimethyl-(4,5-benzo-1-indenyl) (methyl-1-cyclopentadienyl)zirconium dichloride,
isopropylene-(4,5-benzo-1-indenyl)cyclopentadienylzirconium dichloride,
isopropylene-(2-methyl-4,5-benzo-1-indenyl)cyclopentadienylzirconium dichloride or mixtures of at least two of these catalysts.

4. The process as claimed in one or more of claims 1 to 3, wherein the cocatalyst used is an aluminoxane.

5. The process as claimed in one or more of claims 1 to 4, wherein the polycyclic olefin is norbornene or tetracyclododecene.

6. The process as claimed in any one of claims 1 to 4, wherein a copolymer of norbornene and ethylene is prepared.

7. A cycloolefin copolymer which can be prepared by the process as claimed in one or more of claims 1 to 6.

## Revendications

1. Procédé de préparation d'un copolymère de cyclooléfine(s) par polymérisation de 0,1 à 99,9% en poids, par rapport à la quantité totale des monomères, d'au moins une oléfine polycyclique de formule I, II, III, IV, V ou VI 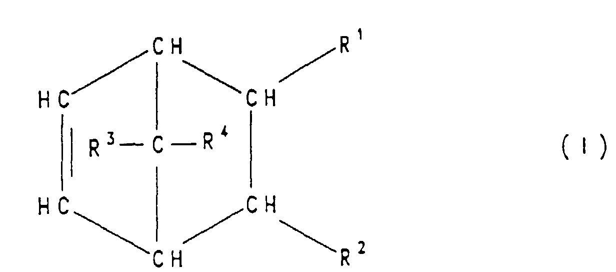 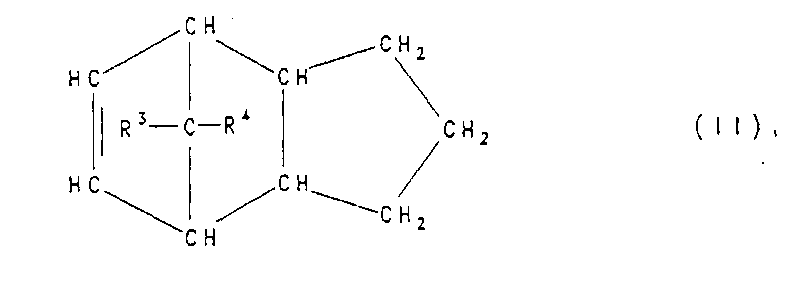 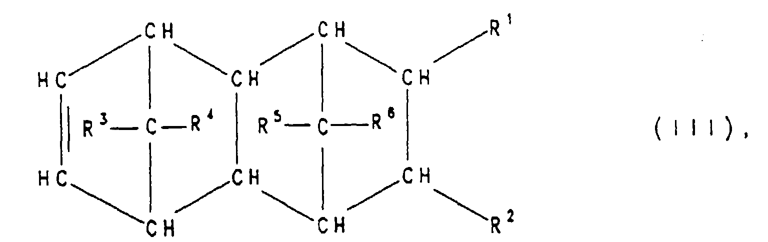 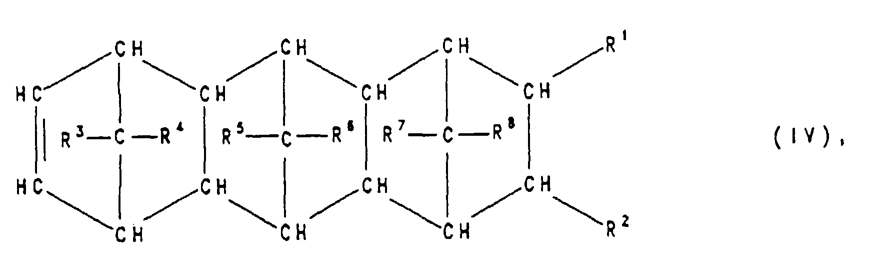 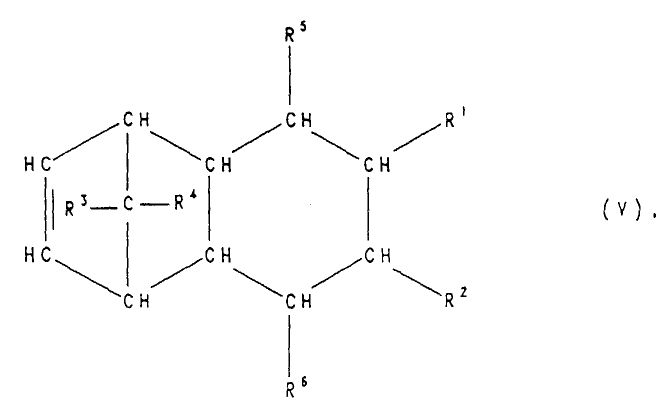 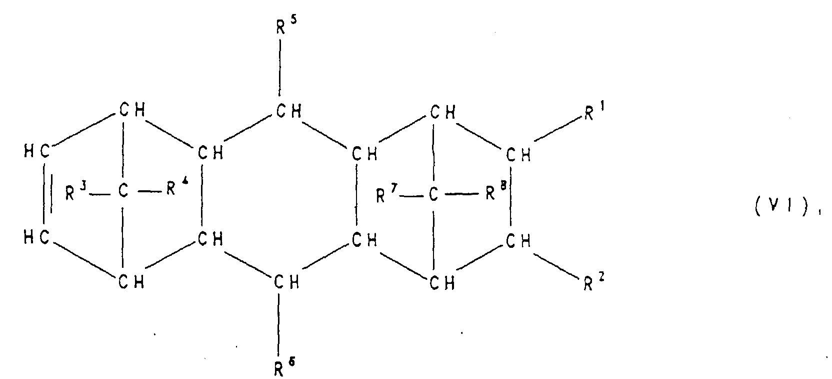 où R¹, R², R³, R⁴, R⁵, R⁶, R⁷ et R⁸ sont identiques ou différents et représentent un atome d'hydrogène ou un radical d'hydrocarbure, les mêmes radicaux dans les différentes formules pouvant avoir une signification différente, 0 à 99,9% en poids, par rapport à la quantité totale des monomères, d'une cyclo-oléfine de formule VII 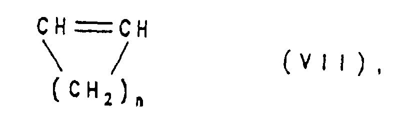 où n est un nombre de 2 à 10, 0,1 à 99,9% en poids, par rapport à la quantité totale des monomères, d'éthylène et 0 à 99,9% en poids, par rapport à la quantité totale des monomères, d'au moins une 1-oléfine acyclique de formule VIII 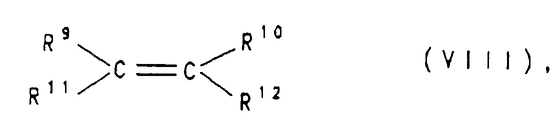 où R⁹, R¹⁰, R¹¹ et R¹² sont identiques ou différents et représentent un atome d'hydrogène ou un radical d'hydrocarbure, à des températures de 20 à 150°C et sous une pression de 0,01 à 64 bar, en présence d'un catalyseur qui est constitué d'au moins un cocatalyseur et d'au moins un métallocène de formule XI, 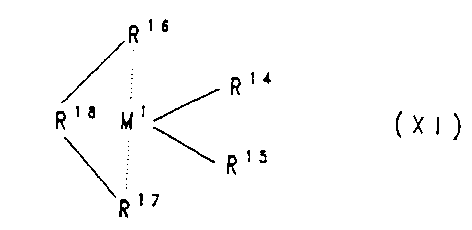 où
M¹ est le titane, le zirconium, l'hafnium, le vanadium, le niobium ou le tantale,
R¹⁴ et R¹⁵ sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀ un groupe arylalkyle en C₇-C₄₀ ou un groupe arylalcényle en C₈-C₄₀,
R¹⁸ est 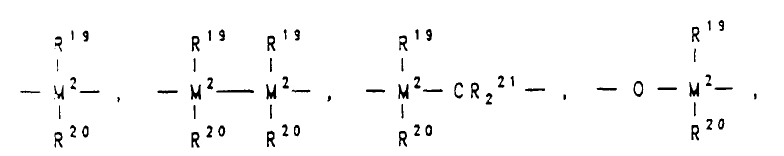 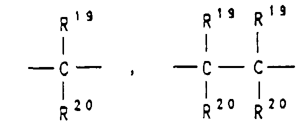 = BR¹⁹ = AlR¹⁹, -Ge-, -Sn-, -O-, -S-, = SO, = SO₂, = NR¹⁹, = CO, = PR¹⁹ ou = P(O)R¹⁹, R¹⁹, R²⁰ et R²¹ étant identiques ou différents et représentant un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀ ou R¹⁹ et R²⁰ ou R¹⁹ et R²¹ forment respectivement, avec les atomes qui les lient, un cycle,
M² est le silicium, le germanium ou l'étain,
caractérisé en ce que R¹⁶ est un groupe cyclopentadiényle et R¹⁷ est un groupe indényle.

2. Procédé selon la revendication 1, caractérisé en ce qu'on polymérise dans la cyclo-oléfine liquide elle-même ou dans une solution de cyclo-oléfine.

3. Procédé selon la revendication 1 ou 2, caractérisé en ce qu'on utilise comme métallocène de formule XI
le dichlorure d'isopropylène-(1-indényl)-cyclopentadiénylzirconium,
le dichlorure d'isopropylène-(1-indényl)-2-méthylcyclopentadiényl-zirconium,
le dichlorure d'éthylène-(1-indényl)-cyclopentadiénylzirconium,
le dichlorure de méthylphénylméthylène-(1-indényl)cyclopentadiényl-zirconium,
le dichlorure de diphénylméthylène-(1-indényl)cyclopentadiényl-zirconium,
le dichlorure de diméthylsilyl-(1-indényl)-cyclopentadiénylzirconium,
le dichlorure de méthylphénylsilyl-(1-indényl)cyclopentadiényl-zirconium,
le dichlorure de diphénylsilyl-(1-indényl)-cyclopentadiénylzirconium,
le dichlorure d'isopropylène-(1-indényl)-cyclopentadiényltitane,
le dichlorure d'isopropylène-(1-indényl)-2-méthylcyclopentadiényl-titane,
le dichlorure de méthylphénylméthylène-(1-indényl)cyclopentadiényl-titane,
le dichlorure de diphénylméthylène-(1-indényl)cyclopentadiényl-titane,
le dichlorure de diméthylsilyl-(1-indényl)-cyclopentadiényltitane,
le dichlorure de méthylphénylsilyl-(1-indényl)cyclopentadiényl-titane,
le dichlorure de diphénylsilyl-(1-indényl)-cyclopentadiényltitane,
le dichlorure de diméthylsilyl(4,5-benzo-1-indényl)cyclopentadiénylzirconium,
le dichlorure de diphénylméthylène(4,5-benzo-1-indényl)cyclopentadiénylzirconium,
le dichlorure de diméthylsilyl(4,5-benzo-1-indényl)(méthyl-1-cyclopentadiényl)zirconium,
le dichlorure d'isopropylène(4,5-benzo-1-indényl)cyclopentadiénylzirconium,
le dichlorure d'isopropylène(2-méthyl-4,5-benzo-1-indényl)cyclopentadiénylzirconium
ou des mélanges d'au moins deux de ces catalyseurs.

4. Procédé selon une ou plusieurs des revendications 1 à 3, caractérisé en ce qu'on utilise un aluminoxane comme cocatalyseur.

5. Procédé selon une ou plusieurs des revendications 1 à 4, caractérisé en ce que l'oléfine polycyclique est le norbornène ou le tétracyclododécène.

6. Procédé selon une ou plusieurs des revendications 1 à 4, caractérisé en ce qu'on prépare un copolymère de norbornène et d'éthylène.

7. Copolymère de cyclo-oléfine(s) qui peut être préparé par le procédé selon une ou plusieurs des revendications 1 à 6.
